# EUROPEAN PATENT APPLICATION

(11) **EP 2 136 559 A1**
(43) Date of publication of application: **23.12.2009**
(21) Application number: 08734102.0
(22) Date of filing: 17.04.2008
(51) Int. Cl.: H04N 7/12

(54) **AN ENCODING AND DECODING METHOD AND MEANS OF MULTIPLE VIEWPOINT**

(30) Priority: 17.04.2007 CN 200710100493
(71) Applicant: Huawei Technologies Co., Ltd., Longgang District, Shenzhen Guangdong 518129 (CN)
(72) Inventor: LIN, Sixin, Shenzhen Guangdong 518129 (CN); GAO, Shan, Shenzhen Guangdong 518129 (CN); LIU, Yingjia, Shenzhen Guangdong 518129 (CN); ZHOU, Jiantong, Shenzhen Guangdong 518129 (CN); HU, Changqi, Shenzhen Guangdong 518129 (CN); XIONG, Lianhuan, Shenzhen Guangdong 518129 (CN)
(74) Representative: Charles, Glyndwr
(86) International application number: PCT/CN2008/070744
(87) International publication number: WO 2008/125066

(57) **Abstract**

A method and an apparatus of multi-view coding and decoding are disclosed herein. In the process of encoding multi-view video images, the frame number and the view identifier information of the image that uses auxiliary reference information are written into a code stream, and sent to the decoder. Therefore, through decoding, the decoder can obtain the frame number and the view identifier information of the image that uses the auxiliary reference information, and determine the auxiliary reference information applied to the specified image according to the frame number and the view identifier information. Further, errors of the image may be concealed according to the auxiliary reference information. Therefore, the inter-frame information effectively usable to the process of concealing errors may be determined at the decoder according to the view identifier information, thus improving the performance of multi-view video coding and decoding.

## Description

### FIELD OF THE INVENTION

The present invention relates to coding and decoding technologies, and in particular, to a multi-view coding and decoding technology.

### BACKGROUND

With rapid development of the multimedia communication technologies, people are no longer satisfied with the traditional fixed view vision and 2-dimension (2D) vision. In many application fields such as entertainment, education, tourism, and surgery, people require multi-view video, free view video, and 3-dimension (3D) video.

In order to meet such requirements, multiple cameras may obtain a group of video signals of the same scene from different perspectives and different locations at the same time. This group of video signals is called "multi-view video". Afterward, the obtained video signals are coded and transmitted. The process of coding such a group of video signals is called "multi-view video coding".

In the process of implementing the present invention, the inventor finds that: In the process of multi-view video coding and sending the coded signals to the decoder, some data may be lost or damaged due to channel congestion and bandwidth change. Consequently, the decoder is unable to restore such data after receiving the coded data, and unable to decode data correctly.

### SUMMARY

A method and an apparatus of multi-view coding and decoding are disclosed in an embodiment of the present invention to improve the performance of coding and decoding effectively.

A multi-view coding method is disclosed herein to encode multi-view video images. In the process of encoding multi-view video image information and writing the information into a code stream, auxiliary reference information as well as the frame number and the view identifier information of an image that uses such auxiliary reference information are written into the code stream and the code stream is sent to the decoder.

A multi-view coding apparatus is provided herein. The multi-view coding apparatus includes a multi-view image coding unit, which is adapted to encode a multi-view video image; and includes the following units:
an auxiliary reference information coding unit, adapted to write auxiliary reference information as well as the frame number and the view identifier information of an image that uses such auxiliary reference information into a code stream; and
a sending unit, adapted to send the code stream obtained through the coding operation of the multi-view image coding unit and the auxiliary reference information coding unit to the decoder.

A multi-view decoding method is provided herein to decode a multi-view video image. The process of decoding the multi-view video image information further includes:
decoding the received multi-view video code stream to obtain auxiliary reference information as well as the frame number and the view identifier information of an image that uses such auxiliary reference information.

A multi-view decoding method is provided herein to decode a multi-view video image. The process of decoding the multi-view video image information further includes:
decoding the received multi-view video code stream to obtain a frame number and a view identifier information of an image that uses such auxiliary reference information;
determining the auxiliary reference information applied to the image specified by the frame number and the view identifier according to the obtained frame number and view identifier information; and
concealing the errors of the specified image according to the auxiliary reference information.

A multi-view decoding apparatus is provided herein. The multi-view decoding apparatus includes a multi-view image decoding unit, which is adapted to decode multi-view video images, and includes the following units:
a code stream receiving unit, adapted to receive a code stream which carries auxiliary reference information as well as the frame number and the view identifier information of an image that uses such auxiliary reference information; and
an auxiliary reference information decoding unit, adapted to decode the code stream received by the code stream receiving unit to obtain auxiliary reference information as well as the frame number and the view identifier information of an image that uses such auxiliary reference information.

A multi-view decoding apparatus is provided herein. The multi-view decoding apparatus includes a multi-view image decoding unit, which is adapted to decode multi-view video images, and includes the following units:
a code stream receiving unit, adapted to receive a code stream which carries auxiliary reference information as well as the frame number and the view identifier information of an image that uses such auxiliary reference information;
an auxiliary reference information decoding unit, adapted to decode the code stream received by the code stream receiving unit to obtain auxiliary reference information as well as the frame number and the view identifier information of an image that uses such auxiliary reference information;
an auxiliary reference information determining unit, adapted to determine the auxiliary reference information applied to the specified image according to the frame number and the view identifier information of an image that uses such auxiliary reference information, where the frame number and the view identifier information are obtained by the auxiliary reference information decoding unit; and
an error concealing unit, adapted to conceal the errors of the image that uses the auxiliary reference information according to the auxiliary reference information determined by the auxiliary reference information determining unit.

Through the technical solution under the present invention described above, it can be seen that, in the multi-view video coding and decoding process, the decoder can obtain the view identifier information of all the images, namely, determine the view from which each image comes. Therefore, the inter-frame information effectively usable to the process of concealing errors can be determined according to the view identifier information, thus improving the performance of multi-view video coding and decoding.

### BRIEF DESCRIPTION OF THE DRAWINGS

FIG. 1 is a first schematic diagram showing the flowchart of multi-view decoding according to an embodiment of the present invention;
FIG. 2 is a second schematic diagram showing the flowchart of multi-view decoding according to an embodiment of the present invention; and
FIG. 3 is a schematic diagram showing a structure of an apparatus according to an embodiment of the present invention.

### DETAILED DESCRIPTION

In the process of encoding multi-view video images in embodiments of the present invention, the auxiliary reference information as well as the frame number and the view identifier information of the image that uses such auxiliary reference information are written into a code stream as auxiliary enhancement information, and sent to the decoder. Therefore, in the process of decoding the multi-view video image information, the received multi-view video code stream may be decoded to obtain the auxiliary reference information as well as the frame number and the view identifier information of the image that uses such auxiliary reference information. After the decoder obtains the auxiliary reference information as well as the frame number and the view identifier information of the image that uses such auxiliary reference information, the currently applied auxiliary reference information may be determined according to the frame number and the view identifier information of the image that uses such auxiliary reference information. Further, errors of the specified image (namely, the image specified by the frame number and the view identifier information) can be concealed according to the auxiliary reference information.

In an embodiment, the auxiliary reference information refers to the information that helps decoding and displaying, including: a repeated reference frame mark information, or a reference frame, or other information that helps conceal errors. For the data encoded through the multi-view video coding technology, the decoder can conceal errors by using the inter-frame information effectively, with a view to improving the decoding effect of the decoder and enhancing the performance of coding and decoding. For example, errors of a specified image may be concealed according to a determined repeated reference frame mark information; or errors of a specified image may be concealed according to a specified decoded reference image; or the foregoing two concealment methods may be applied concurrently; or errors of the specified image may be concealed through other concealment methods.

To make the embodiments of the present invention clearer, the implementation process of the embodiments of the present invention is detailed below by reference to accompany drawings.

In an embodiment of the present invention, it needs to set the view identifier and the frame number of a repeated reference frame mark information in the coding process, as described in the following table:

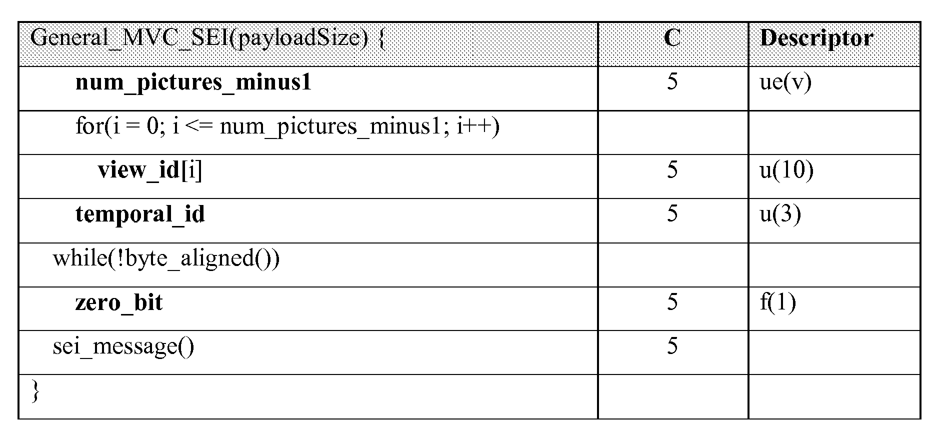

The view identifier information "view_id" and the frame number "temporal_id" in the foregoing table may specify the application range of the auxiliary reference information "sei_message()", namely, specify the images to which the auxiliary reference information is applied. In this embodiment, if the corresponding auxiliary reference information may be applied to an image specified by the view identifier "view_id" and the frame number "temporal_id", the corresponding errors may be concealed.

The embodiment of the present invention is expounded in more detail, supposing that a repeated reference frame mark information and a reference frame serve as auxiliary reference information respectively.

### (I) Error concealment based on a repeated reference frame mark information

In the process of multi-view coding and decoding, the function of a reference frame mark information is to mark images as a long-term reference frame, or a short-term reference frame, or a non-reference frame so that the decoder can make use of the reference frame effectively according to the reference frame mark information to improve the efficiency of coding and decoding. If the reference frame mark information is transmitted to the decoder through a code stream, in order to prevent video decoding errors caused by loss of the reference frame mark information in the process of transmitting the code stream, a repeated reference frame mark information may be applied. That is, the reference frame mark information of a frame is transmitted repeatedly in the subsequent code streams, with a view to improving the error-resilient capability of the decoder and enhancing the multi-view video transmission performance.

In a decoder corresponding to multi-view coding, in order to use the repeated reference frame mark information correctly, it is necessary to know the image from which the repeated reference frame comes. That is, it needs to know not only the information in the time direction (namely, the frame number), but also the corresponding view identifier (indicating the view from which the flag comes). Therefore, in the coding process, it needs to set the view identifier and the frame number of the repeated reference frame mark information, as shown in Table 1 and Table 2:

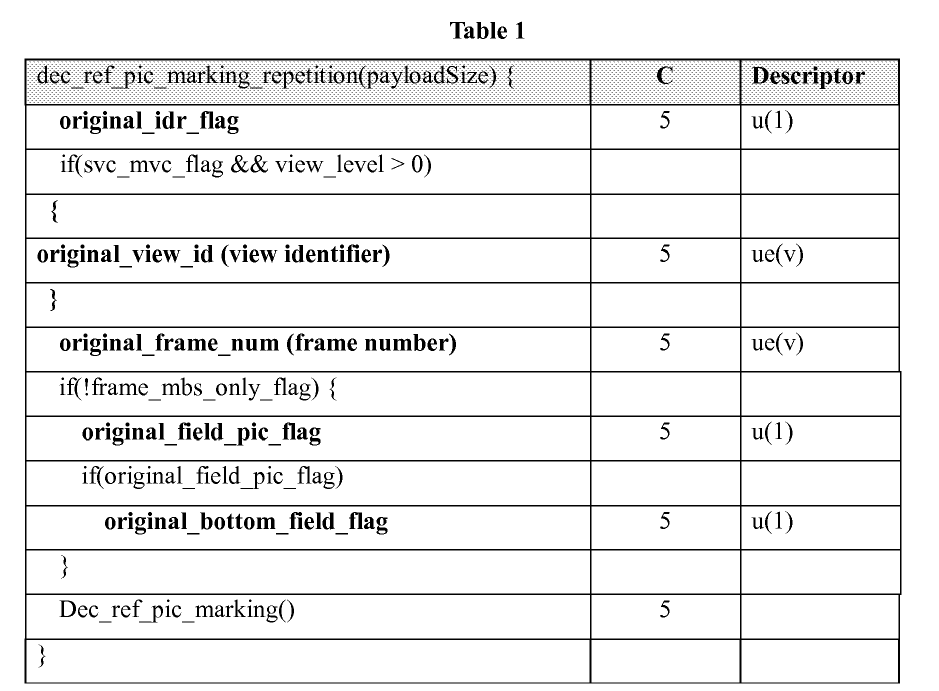

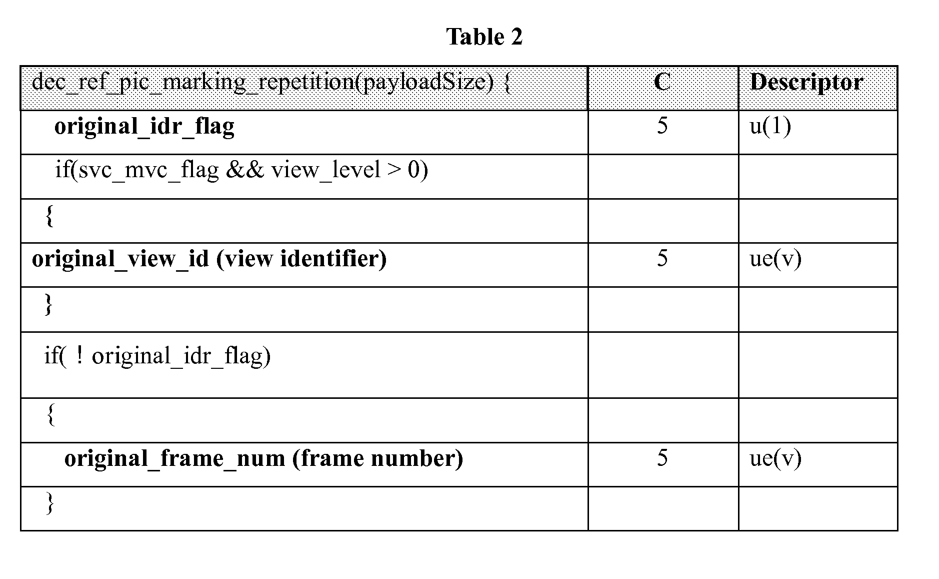

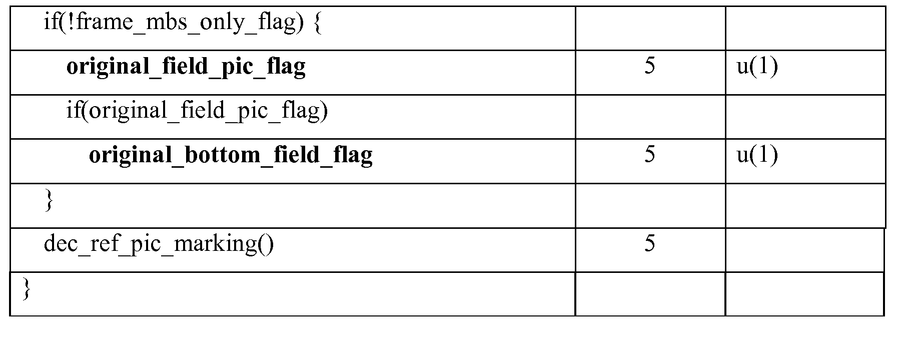

The foregoing tables show that if multi-view coding is applied, it needs to encode the view identifier "original_view_id" of the repeated reference frame mark information in the code stream.

The main parameters in Table 1 and Table 2 are described below:
originial_idr_flag: indicates whether the image with a repeated reference frame mark information is an IDR frame;
original_view_id: a view identifier of the reference frame mark, for indicating the view from which the reference frame mark information comes;
original_frame_num: indicates the frame number of the image with a repeated reference frame mark information;
original_field_pic_flag, original_bottom_field_flag: indicates the field information of the image with a repeated reference frame mark information; and
dec_ref_pic_marking(): indicates the syntax structure of the repeated reference frame mark information. This parameter carries specific flag information.

Therefore, the coder may transmit the information in Table 3 to the decoder:

**Table 3**

| | | | |
|---|---|---|---|
| **original_idr_flag** | **original_view_id** | **original_frame_num** | ... |

After receiving the information in Table 3, the decoder can decide the repeated reference frame mark information according to the frame number and the view identifier in such information, and conceal the errors by using the reference frame mark information information, thus improving the performance of multi-view video coding and decoding.

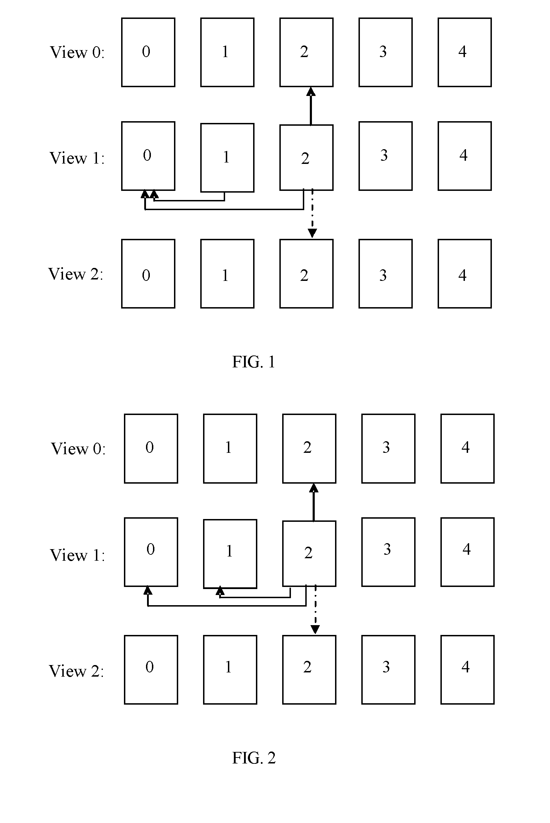

In the foregoing embodiment about error concealing based on a repeated reference frame mark information, if the data of a frame is lost, the reference frame mark information corresponding to the frame may determine the corresponding reference frame by using other frame's reference frame mark information which is transmitted repeatedly later. In this way, the errors caused by lost or damaged data may be concealed effectively. As shown in FIG. 1, when frame 2 of view 1 of the original image with a repeated reference frame mark information is erroneous, the flag information of frame 2 of the adjacent view may be used to conceal the error.

### (II) Error concealment based on a reference frame

In this embodiment, if the current image for decoding (namely, target image) fails to be decoded correctly, the frame being decoded currently is corrected by using one or more decoded reference images (namely, reference frames) to mask the errors and improve the decoding performance. For example, the image being decoded currently may use a slice group in the counterpart position of the reference frame to correct the slice group that fails to be decoded correctly in the counterpart position in the frame of the image, thus concealing the errors.

In the multi-view video coding process, in order to enable the decoder to know the image from which the standby image (namely, reference frame) comes, it needs to send the information in the time direction (namely, frame number) of the reference frame and the view identifier (indicating the view from which the reference frame comes) to the decoder. Table 4 gives details of the solution.

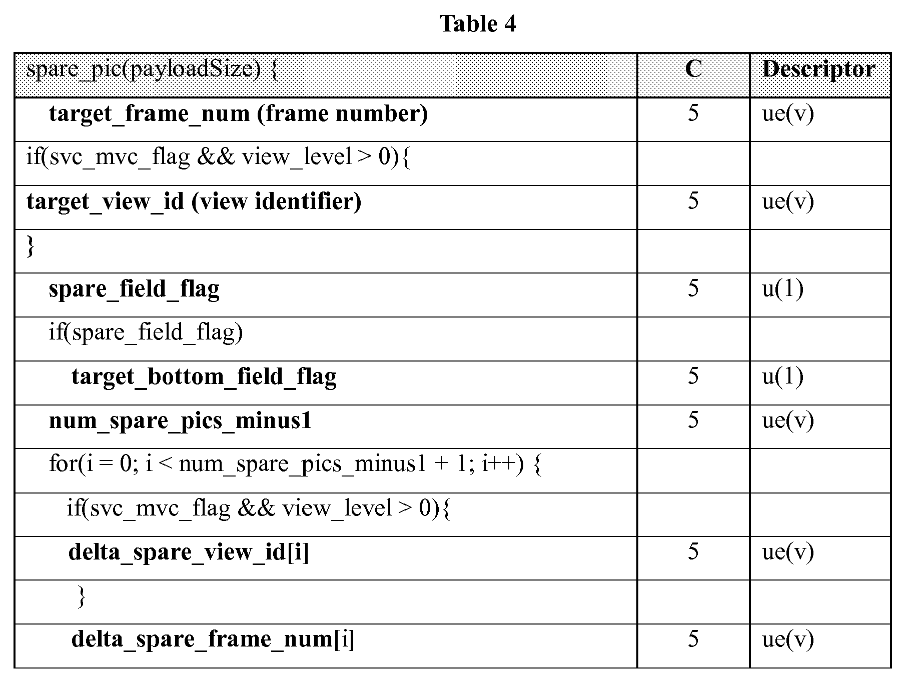

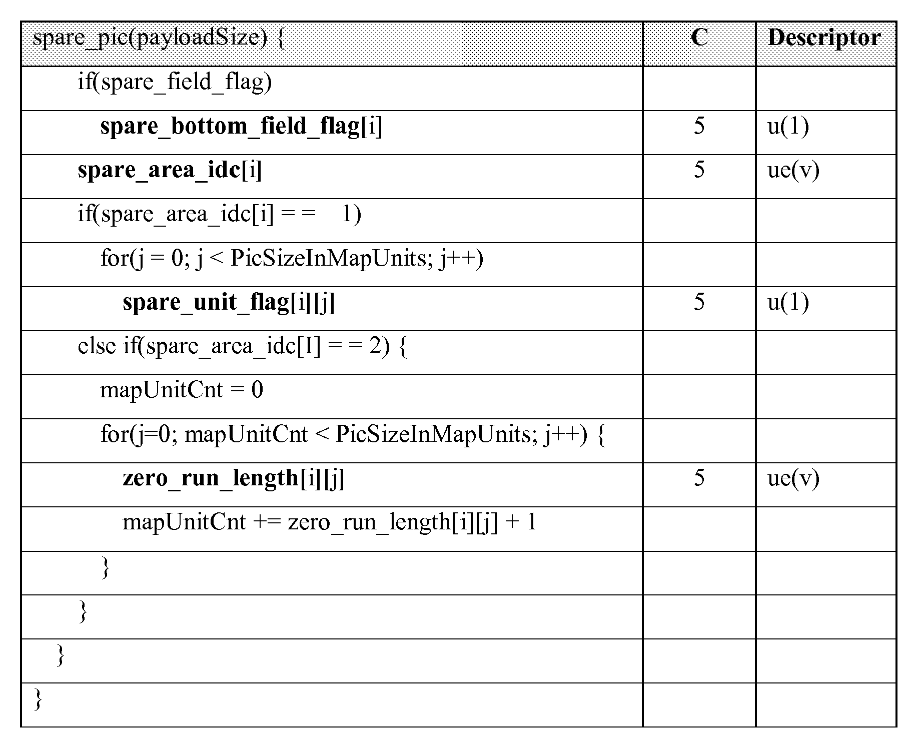

Table 4 shows that if multi-view coding is applied, it needs to encode the view of the target image as well as the difference between the standby image view and the target image view in the code stream so that the decoder can conceal errors of the target image by using the reference frame between views correctly.

The main parameters in Table 4 are described below:
target_frame_num: a frame number for decoding the target image;
target_view_id: view identifier of the target image; and
delta_spare_view_id[i]: determines the view_id of the i standby slice group (i is an ordinal number) in the reference frame, where the value of view_id in the reference frame ranges from 0 to 1023 inclusive.

Supposing that the value of i ranges from 0 to num_spare_pics_minus1 inclusive, the view_id of the i reference frame (i is an ordinal number), namely, spareViewId[i], is the view identifier of the i reference frame, as inferred below:
Among the num_spare_pics_minus1+1 reference frames, the view identifier of each reference frame may be obtained according to the difference between the view identifier value "target_view_id" of the target image and the view identifier of the reference image, where the difference is delta_spare_view_id[i]:
spareViewld[i] = target_view_id - delta_spare_view_id[i].
spare_field_flag: indicates whether the decoding mode of the target image (the frame being decoded currently) and the reference frame is "field decoding" or "frame decoding";
target_bottom_field_flag: indicates whether the target image belongs to a bottom field or a top field;
num_spare_pics_minus1: indicates the quantity of reference frames available to the target image; and
delta_spare_frame_num[i]: determines the i standby slice group unit (i is an ordinal number) included in the reference frame.

Supposing that the value of i ranges from 0 to num_spare_pics_minus1 inclusive, the process of determining the frame number for decoding, namely, spareFrameNum[i], of the [i] reference frame is as follows:

First, the frame number of the candidate standby image is determined according to the frame number and the decoding mode flag of the target image; and

Afterword, the frame number for decoding is determined according to the frame number of the candidate standby image (namely, candidateSpareFrameNum) as well as the difference (namely, delta_spare_frame_num[i]) between the frame number of the standby image and the frame number of the target image:
spareFrameNum[i] = candidateSpareFrameNum - delta_spare_frame_num[i].

The pseudo-codes of the process for deducing the frame number of the reference frame (namely, spareFrameNum[i]) are as follows:

```
      candidateSpareFrameNum = target_frame_num - !spare_field_flag
      for (i = 0; i <= num_spare_pics_minus1; i++) {
          if (candidateSpareFrameNum < 0)
      candidateSpareFrameNum = MaxFrameNum - 1
          spareFrameNum[i] = candidateSpareFrameNum - delta_spare_frame_num[i]
          if (spareFrameNum[i] < 0)
      spareFrameNum[i] = MaxFrameNum + spareFrameNum[i]
          candidateSpareFrameNum = spareFrameNum[i] - !spare_field_flag
      };
```

spare_bottom_field_flag[i]: indicates whether the [i] reference frame belongs to the bottom field or the top field;
spare_area_idc[i]: indicates the mode of determining the standby slice group unit in the [i] reference frame. For example, the mode may be: pointing out that any slice group in the [i] image is a reference unit (namely, the reference information used by the reference frame to conceal errors), or pointing out that a value of a syntax element "spare_unit_flag[i][j]" is used to determine the reference frame slice group unit, or pointing out that the syntax element "zero_run_length[i][j]" is used to determine the value of the spareUnitFlagInBoxOutOrder[i][j];
zero_run_length[i][j]: deduces the value of the spareUnitFlagInBoxOutOrder[i][j] according to the value of the spare_area_idc[i], where the spareUnitFlagInBoxOutOrder[i][j] indicates whether the j slice group (i and j are ordinal numbers) in a counterclockwise Box-out (from the center of a box outward) scan sequence in the i reference frame is a reference unit; and
spare_unit_flag[i][j]: indicates whether the j slice group in a raster scan sequence in the i reference frame is a reference unit.

Therefore, the coder may transmit the information in the following Table 5 to the decoder:

**Table 5**

| | | | | | |
|---|---|---|---|---|---|
| - **target_frame** - **_num** | **- target_ -view** - **_id** | **- spare_fie -Id** - **_flag** | **- num_spare -** - **_pics_minu s1** | **delta_spa re_view_id** | - |

In this way, the decoder may identify the view from which the reference frame comes, and may identify the frame number. Therefore, errors can be concealed at the decoder by using the corresponding reference frame.

In this embodiment, errors can be concealed effectively by using a reference frame in the process of multi-view video decoding in order to improve the performance of multi-view video decoding. As shown in FIG. 2, when a slice group in the position of frame 2 of view 1 in the image to be decoded fails to be decoded correctly, the errors may be concealed by using the slice group in the counterpart position in the decoded frame 2 of the adjacent view.

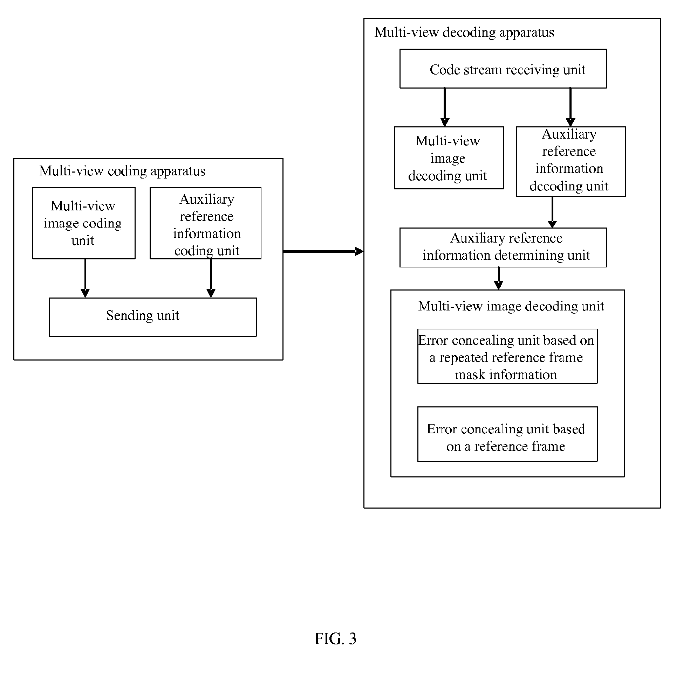

A multi-view coding apparatus is also disclosed in an embodiment of the present invention. As shown in FIG. 3, the apparatus includes the following processing units:
a multi-view image coding unit, adapted to encode a multi-view video image;
an auxiliary reference information coding unit, adapted to: write auxiliary reference information that needs to be sent to the decoder, and the frame number and the view identifier information of an image that uses such auxiliary reference information, into a code stream, where the auxiliary reference information refers to the information that helps decoding and displaying, for example, a repeated reference frame mark information, or a reference frame; and
a sending unit, adapted to send the code stream obtained through the coding operation of the multi-view image coding unit and the auxiliary reference information coding unit to the decoder.

Corresponding to the multi-view coding apparatus, a multi-view decoding apparatus is also disclosed in an embodiment of the present invention. As shown in FIG. 3, the apparatus includes the following processing units:
a code stream receiving unit, adapted to receive a code stream which carries auxiliary reference information as well as the frame number and the view identifier information of an image that uses such auxiliary reference information;
a multi-view image decoding unit, adapted to decode a multi-view video image in the received code stream in order to obtain the video image information of each view; and
an auxiliary reference information decoding unit, adapted to decode the code stream received by the code stream receiving unit to obtain auxiliary reference information as well as the frame number and the view identifier information of an image that uses such auxiliary reference information.

In the decoding process, errors of images may be concealed by using the auxiliary reference information obtained by the auxiliary reference information decoding unit, and by using the frame number and the view identifier information of the image that uses such auxiliary reference information, with a view to improving the decoding effect. Therefore, the apparatus may further include the following processing units:
an auxiliary reference information determining unit, adapted to determine the auxiliary reference information applied to the specified frame according to the frame number and the view identifier of an image that uses such auxiliary reference information, where the frame number and the view identifier information are obtained by the auxiliary reference information decoding unit; and
an error concealing unit, adapted to conceal the errors of the frame specified by the frame number and the view identifier according to the auxiliary reference information determined by the auxiliary reference information determining unit.

Optionally, depending on the mode of concealing errors (namely, depending on the auxiliary reference information such as repeated reference frame mark information and reference frame), the error concealing unit may include either or both of the following units:
an error concealing unit based on a repeated reference frame mark information, adapted to conceal the errors of the specified frame according to the repeated reference frame mark information determined by the auxiliary reference information determining unit; and
an error concealing unit based on a reference frame, adapted to conceal the errors of the frame specified by a frame number and a view identifier according to a decoded reference frame determined by the auxiliary reference information determining unit.

Through the coding and decoding apparatuses described above, in the multi-view video coding and decoding process, the decoder may obtain the view identifier information of all the frames, namely, determine the view from which each frame comes. Therefore, the inter-frame information effectively usable to the process of concealing errors may be determined according to the view identifier information, thus improving the performance of multi-view video coding and decoding.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method of multi-view coding, adapted to encode multi-view video images, wherein a process of encoding multi-view video image information and writing the information into a code stream further comprises:
writing auxiliary reference information as well as the frame number and the view identifier information of an image that uses such auxiliary reference information into the code stream and sending the code stream to a decoder.

2. The method according to claim 1, wherein the auxiliary reference information comprises the information that helps decoding and displaying.

3. The method according to claim 1, wherein the auxiliary reference information comprises at least one of a repeated reference frame mark information and a reference frame.

4. An apparatus of multi-view coding, comprising a multi-view image coding unit, adapted to encode a multi-view video image; and further comprising:
an auxiliary reference information coding unit, adapted to write auxiliary reference information as well as the frame number and the view identifier information of an image that uses such auxiliary reference information into a code stream; and
a sending unit, adapted to send the code stream obtained through the coding operation of the multi-view image coding unit and the auxiliary reference information coding unit to the decoder.

5. A method of multi-view decoding, adapted to decode multi-view video images, wherein a process of decoding the multi-view video image information further comprises:
decoding the received multi-view video code stream to obtain auxiliary reference information as well as the frame number and the view identifier information of an image that uses an auxiliary reference information.

6. The method according to claim 5, wherein the auxiliary reference information comprises the information that helps decoding and displaying.

7. The method according to claim 5, wherein the auxiliary reference information comprises a repeated reference frame mark information or a reference frame.

8. A method of multi-view decoding, adapted to decode multi-view video images, wherein a process of decoding the multi-view video image information further comprises:
decoding the received multi-view video code stream to obtain a frame number and a view identifier information of an image that uses an auxiliary reference information;
determining the auxiliary reference information applied to the image specified by the frame number and the view identifier according to the obtained frame number and view identifier information; and
concealing the errors of the specified image according to the auxiliary reference information.

9. The method according to claim 6, wherein concealing the errors of the specified image according to the auxiliary reference information comprises at least one of the following ways:
concealing the errors of the specified image according to a determined repeated reference frame mark information; or
concealing the errors of the specified image according to a specified decoded reference frame.

10. An apparatus of multi-view decoding, comprising a multi-view image decoding unit, adapted to decode multi-view video images, wherein the apparatus further comprises:
a code stream receiving unit, adapted to receive a code stream which carries auxiliary reference information as well as the frame number and the view identifier information of an image that uses such auxiliary reference information; and
an auxiliary reference information decoding unit, adapted to decode the code stream received by the code stream receiving unit to obtain auxiliary reference information as well as the frame number and the view identifier information of an image that uses such auxiliary reference information.

11. An apparatus of multi-view decoding, comprising a multi-view image decoding unit, adapted to decode multi-view video images, wherein the apparatus further comprises:
a code stream receiving unit, adapted to receive a code stream which carries auxiliary reference information as well as the frame number and the view identifier information of an image that uses such auxiliary reference information;
an auxiliary reference information decoding unit, adapted to decode the code stream received by the code stream receiving unit to obtain auxiliary reference information as well as the frame number and the view identifier information of an image that uses such auxiliary reference information;
an auxiliary reference information determining unit, adapted to determine the auxiliary reference information applied to the specified image according to the frame number and the view identifier information of an image that uses such auxiliary reference information, where the frame number and the view identifier information are obtained by the auxiliary reference information decoding unit; and
an error concealing unit, adapted to conceal the errors of the image that uses the auxiliary reference information according to the auxiliary reference information determined by the auxiliary reference information determining unit.

12. The apparatus according to claim 11, wherein the error concealing unit comprises at least one following units:
an error concealing unit based on a repeated reference frame mark information, adapted to conceal the errors of the specified frame according to the repeated reference frame mark information determined by the auxiliary reference information determining unit; or
an error concealing unit based on a reference frame, adapted to conceal the errors of the frame specified by a frame number and a view identifier according to a decoded reference frame determined by the auxiliary reference information determining unit.
